Europäisches Patentamt

European Patent Office

Office européen des brevets

(11) Veröffentlichungsnummer: **0 189 211 B1**

## (12) EUROPÄISCHE PATENTSCHRIFT

(45) Veröffentlichungstag der Patentschrift: **16.10.91**

(21) Anmeldenummer: **86100961.1**

(22) Anmeldetag: **24.01.86**

(51) Int. Cl.⁵: **H02M 5/27**, H02M 5/27

(54) Verfahren zur natürlichen, netz- oder verbrauchergeführten Kommutierung.

(30) Priorität: **24.01.85 DE 3502204**

(43) Veröffentlichungstag der Anmeldung:
**30.07.86 Patentblatt 86/31**

(45) Bekanntmachung des Hinweises auf die
Patenterteilung:
**16.10.91 Patentblatt 91/42**

(84) Benannte Vertragsstaaten:
**AT CH DE FR GB LI**

(56) Entgegenhaltungen:
**EP-A- 0 124 302**
**DE-A- 2 030 107**

**Lappe: Thyristor-Stromrichter für Antriebsregelungen, VEB-Verlag**

(73) Patentinhaber: **Hienz, Georg, Dipl.-Ing.**
**Haderunstrasse 21**
**W-8000 München 70(DE)**

(72) Erfinder: **Hienz, Georg, Dipl.-Ing.**
**Haderunstrasse 21**
**W-8000 München 70(DE)**

(74) Vertreter: **Grättinger, Günter**
**Wittelsbacherstrasse 5 Postfach 16 49**
**W-8130 Starnberg(DE)**

**Beschreibung**

Die Erfindung betrifft ein Verfahren zur natürlichen, netz- oder verbrauchergeführten Kommutierung eines Direktumrichters, geschaltet zwischen einen M-phassigen Netz mit der Frequenz F und einem m-phasigen Verbraucher mit der Frequenz f, insbesondere einer elektrischen Maschine, wobei der Direktumrichter $2 \cdot M \cdot m$ Thyristoren umfaßt, die jede Netzphase mit jeder Verbraucherphase bidirektional verbinden.

Ein derartiger Umrichter ist beschrieben in DE-B.: "Thyristor-Stromrichter für Antriebsregelungen"; Prof.Dr.-Ing. habil. Rudolf Lappe u.a., VEB Verlag Technik Berlin, 1968, S.276-297. Die bekannte Schaltung umfaßt nach einer ersten Variante (Bild 10.4 a) über die Merkmale des Oberbegriffs von Patentanspruch 1 hinaus auch noch Kreisstromdrosseln, die zwischen Umrichter und Last geschaltet und für die volle Leistung auszulegen sind. Außerdem ist zur Steuerung des bekannten Umrichters eine Überwachung der Stromrichtung aller drei Verbraucherströme erforderlich. Eine zweite Variante (Bild 10.4 b) der bekannten Schaltung sieht die Verwendung von sechs vollgesteuerten Drehstrombrücken vor, das heißt, es ist verglichen mit der ersten Variante die doppelte Anzahl von Thyristoren vorgesehen.

Ferner ist ein mehrphasiger Frequenzgenerator aus DE-A-20 30 107 bekannt, der bei dreiphasigem Ein- und Ausgang mit 18 abschaltbaren Ventilen auskommt. Setzt man einen dreiphasigen Verbraucher und ein dreiphasiges Netz voraus, so sind stets drei Ventile gleichzeitig stromführend. Der bekannte Frequenzgenerator ist lediglich als Steuerungsgenerator einsetzbar, d.h. dessen Einsatz in der elektrischen Antriebstechnik ist nicht vorgesehen. Für die Ansteuerung von Thyristoren ist der bekannte Frequenzgenerator ungeeignet, da dessen Funktionsprinzip abschaltbare Schaltelemente voraussetzt.

Ein anderer Umrichter ist beschrieben in G. Möltgen, "netzgeführte Stromricher mit Thyristoren" (Verlag Siemens AG, Berlin und München, dritte Auflage 1974, Kapitel 29, S. 291-299). Die Schaltung dort (Bild 225) umfaßt neben drei dreiphasigen Trenntransformatoren sechs vollgesteuerte Drehstromrichterbrük-ken mit insgesamt 36 Thyristoren. Für den Fall ohne Sternpunktleiter umfaßt die Schaltung dort (Bild 226) drei Trenntransformatoren mit drei im Dreieck gestaltete Drehstromrichterbrücken mit insgesamt 18 Thyristoren.

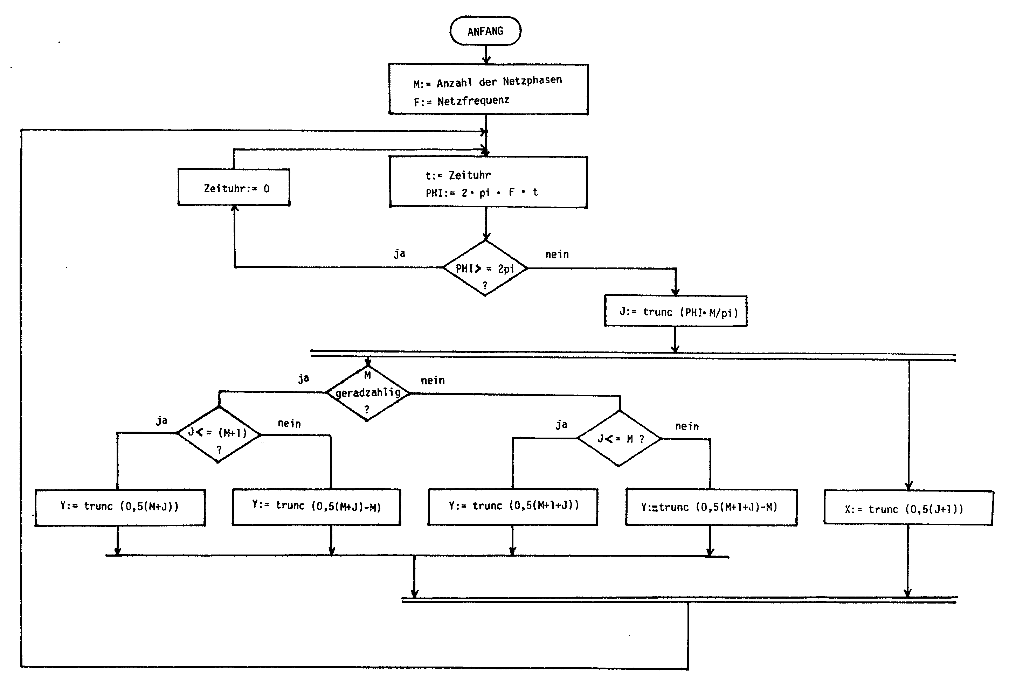

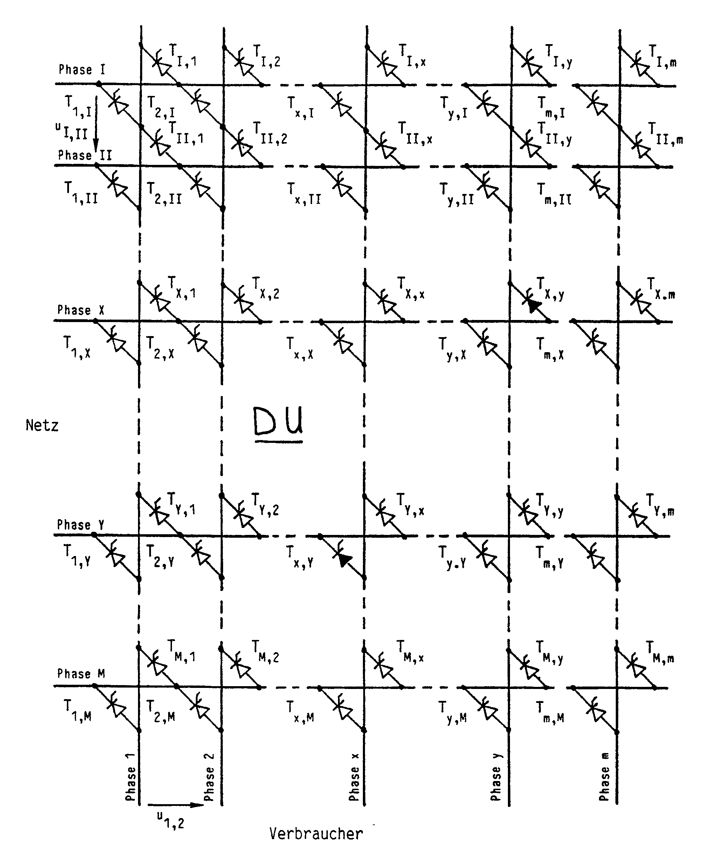

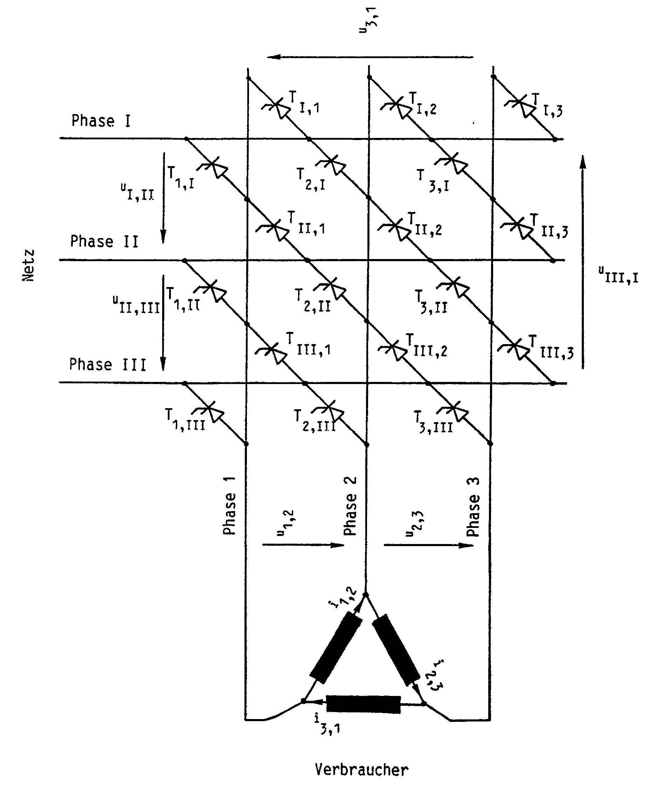

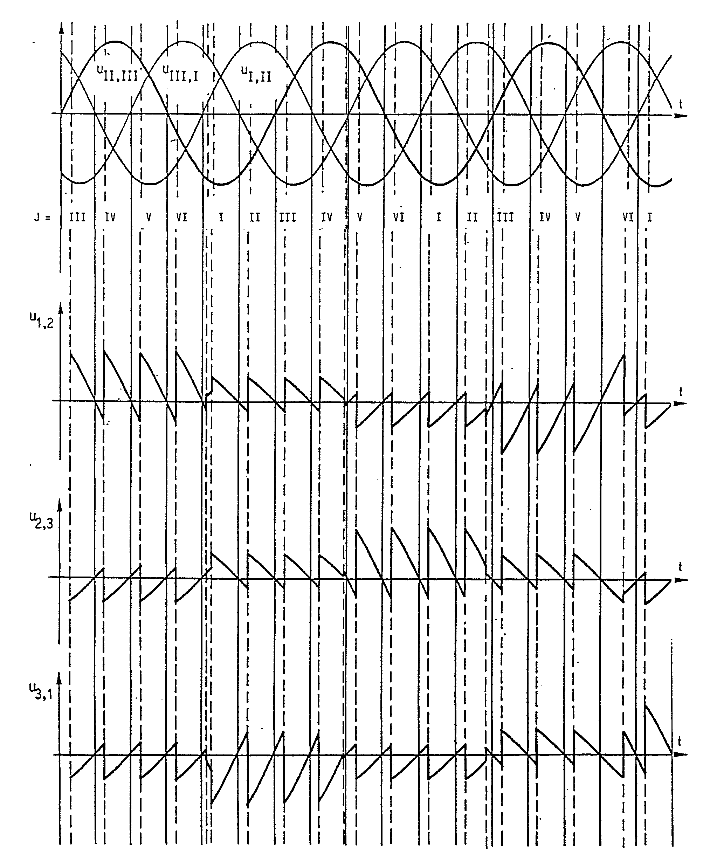

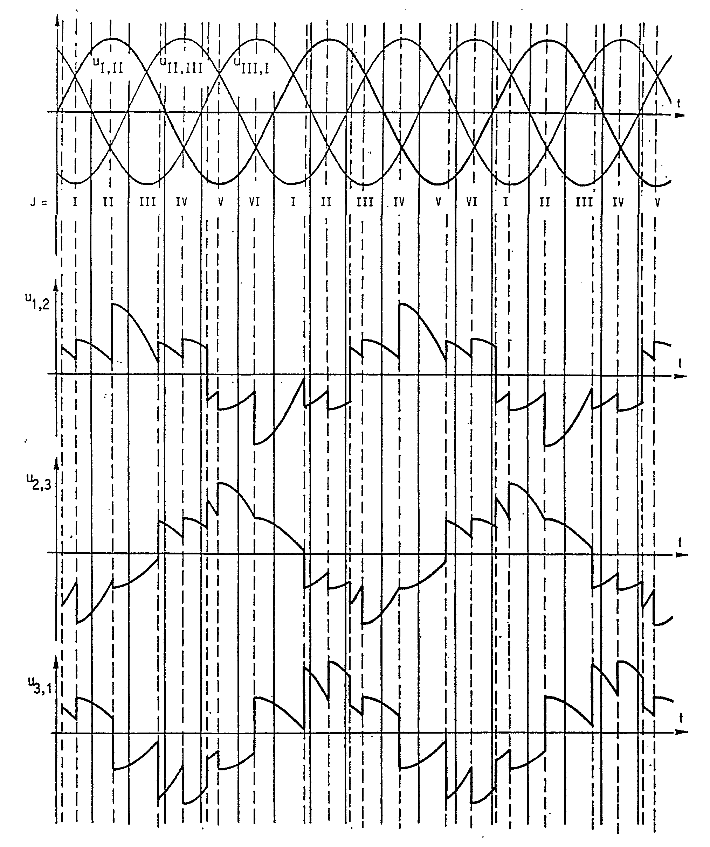

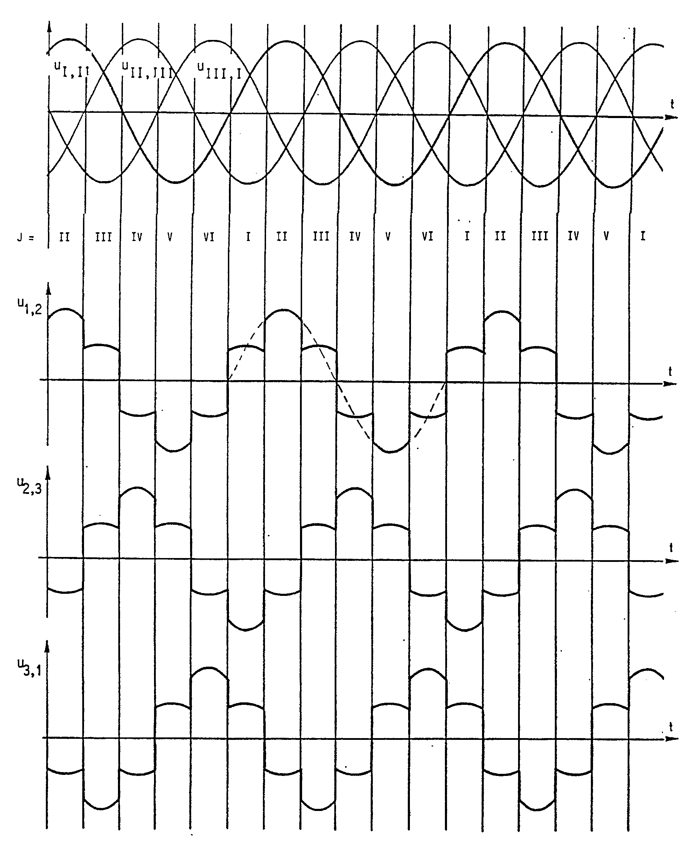

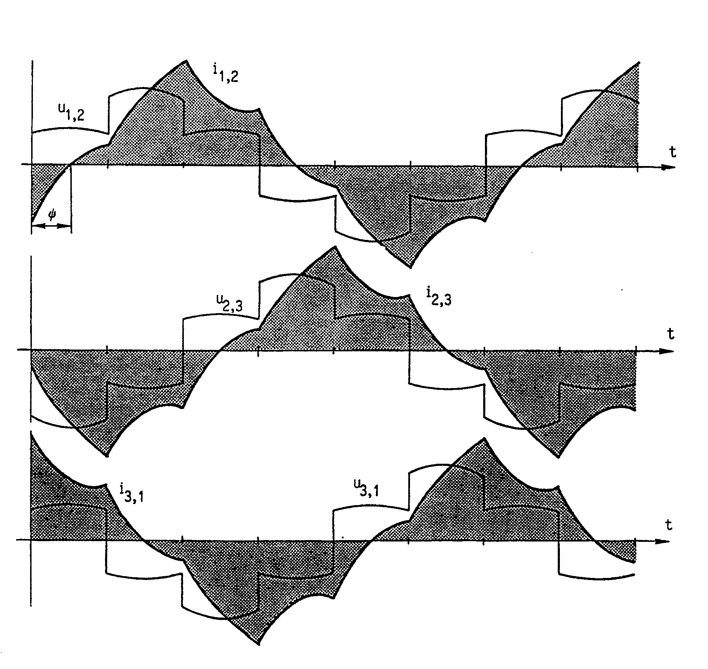

In Bödefeld/Sequenz "Elektrische Maschinen" (Springerverlag 1981, S. 262, Abb. 3.74) ist ein Direktumrichter mit variabler Frequenz und Spannungsamplitude zum Betrieb einer dreiphasigen Synchronmaschine beschrieben. Jede der drei Maschinenwicklungen wird seperat von zwei antiparallel geschalteten, vollgesteuerten Drehstromrichterbrücken (Umkehrstromrichter) gespeist, wobei die Wicklungen untereinander keine galvanischen Verbindungen aufweisen. Zwischen Direktumrichter und Drehstromnetz sind ebenfalls dreiphasige Trenntransformatoren geschaltet.

Ähnliche Schaltungen werden in R. Jäger, "Leistungselektronik Grundlagen und Anwendungen" (VDE-Verlag 1977, S. 248-250) sowie in K.Bystorn "Leistungselektronik" (Band II, Hanser -Verlag München und Wien 1979, S. 310-313) beschrieben.

Alle diese Schaltungen weisen den gravierenden Nachteil auf, daß im Falle einer dreiphasigen Ausführung lediglich Ausgangsfrequenzen bis zu höchstens 40% der Eingangsfrequenz gefahren werden können. Bei einem Netz mit einer Frequenz von 50 Hz können mit solchen Umrichtern also maximal etwa 20 Hz erzeugt werden. Ferner sind in der Regel Trenntransformatoren zwischen Netz und Umrichter geschaltet, um interne Kurzschlüsse im Direktumrichter zu vermeiden. Allerdings stellen diese Trenntransformatoren einen erheblichen zusätzlichen Aufwand dar, zumal sie für die volle Leistung auszulegen sind.

Der Erfindung liegt die Aufgabe zugrunde, ein Verfahren zur natürlichen Kommutierung eines Direktumrichters der eingangs genannten Art zu schaffen, das eine kontinuierliche Änderung der Verbraucherfrequenz bzw. der Verbraucherspannung von Null bis zur Netzfrequenz bzw. bis zur Netzspannung ermöglicht. Der Direktumrichter soll dabei mit einer geringen Anzahl von Thyristoren ohne Verwendung weiterer, zwischen Netz und Umrichter und/oder zwischen Umrichter und Verbraucher zu schaltender Energieumformer (z.B. Trenntransformatoren) betreibbar sein.

Diese Aufgabe wird erfindungsgemäß durch die im Anspruch 1 bzw.6 gekennzeichneten Merkmale gelöst.

Demnach führen also - abgesehen von kommutierungsbedingten Überlappungsphasen - im wesentlichen immer nur zwei Thyristoren $T_{X,y}$ und $T_{x,Y}$ gleichzeitig Strom. Mit $T_{X,y}$ bzw. $T_{x,Y}$ sind diejenigen Thyristoren bezeichnet, deren Anode mit der Netzphase X und deren Kathode mit der Verbraucherphase y bzw. deren Anode mit der Verbraucherphase x und deren Kathode mit der Netzphase Y galvanisch verbunden sind.

Für das erfindungsgemäße Kommutierungsverfahren ist ferner wesentlich, daß jede Netzperiode 1/F bzw. Verbraucherperiode 1/f jeweils in $2 \cdot M$ bzw. $2 \cdot m$ Zeitintervalle J bzw. j unterteilt wird. Die Zeitintervalle $J = 1... 2 \cdot M$ bzw. $j = 1... 2 \cdot m$ sind dabei zur verketteten Spannung $u_{I,II}$ bzw. $u_{1,2}$ des Netzes bzw. Verbrauchers synchronisiert. Dementsprechend werden im folgenden ein Netzsynchronisierungswinkel PHI bzw. ein Verbrauchersynchronisierungswinkel phi eingeführt.

Für den Netzsynchronisierungswinkels PHI gilt:

(1) PHI $= 2 \cdot$ pi $\cdot$ F $\cdot$ t $=$ arc sin $(u_{I,II}/U_{I,II}) +$ GAMMA

mit pi $= 3,14$

Hierbei ist $u_{I,II}$ der Momentanwert der Grundschwingung der verketteten Netzspannung, $U_{I,II}$ die Amplitude der verketteten Netzspannung zwischen den Netzphasen I und II.

Für GAMMA gilt:

(2) GAMMA $=$ B $+$ A,

wobei mit B ein fester Netz-Versatzwinkel (rad.) gemeint ist, der zur einmaligen Synchronisation von PHI mit $U_{I,II}$ dient. A steht für den Steuerwinkel (rad.), der die Steuerung des Verhältnisses der Verbraucherspannungsamplitude zur Netzspannungsamplitude bzw. des Stromes und der Leistung bei Netzkommutierung ermöglicht.

Analog gilt für den Verbraucher-Synschronisierungswinkel (rad.):

(3) phi $= 2 \cdot$ pi $\cdot$ f $\cdot$ t $=$ arc sin $(u_{1,2}/U_{1,2}) +$ gamma

Hierbei sind $u_{1,2}$ der Momentanwert der Grundschwingung der verketteten Verbraucherspannung, und $U_{1,2}$ die Amplitude der verketteten Verbraucherspannung zwischen den Verbraucherphasen 1 und 2.

Der Winkel gamma, der einen Verbraucher-Versatzwinkel (rad.) darstellt, ist wie folgt definiert:

(4) gamma $=$ beta $+$ alpha,

wobei beta der feste Verbraucherversatzwinkel (rad.) ist und zur einmaligen Synchronisation von phi mit $u_{1,2}$ dient. Der Steuerwinkel alpha (rad.) dient zur Steuerung des Verhältnisses der Verbraucherspannungsamplitude zur Netzspannungsamplitude bzw. des Stromes und Leistung bei Verbraucherkommutierung.

Während des Überlappungszeitraumes zwischen dem Netzperiodenintervall J und dem Verbraucherperiodenintervall j werden die beiden Thyristoren $T_{X,y}$ und $T_{x,Y}$ zur Zündung freigegeben. Die Zündung selbst erfolgt jeweils zu Beginn des Überlappungszeitraumes.

Die Ermittlung der Zahlen X,Y zur Auswahl der zu zündenden Thyristoren in Abhängigkeit vom Netzsynchronisierungswinkel PHI gem. Gleichung (1) kann insbesondere entsprechend dem nachstehenden als rekursiver Algorithmus dargestellten Prinzip erfolgen:

Algorithmus in PASCAL-ähnlicher Notation:

```
procedure netzsynchronisierte Kommutierung;
const     pi = 3.14;
integer   M,J, X,Y; comment Netzphasen, Zeitinter-
                    vall, Bezeichnung für die Netz-
                    phasen;
radiant   PHI; comment Netzsynchronisierungswinkel;
real      F,t; comment Netzfrequenz, Echtzeit;
```

3

```
begin
M:=Anzahl der Netzphasen;
F:=Netzfrequenz;
J:=1;


while J=J do comment Endlosschleife;
begin
X:=trunc (0,5(J+1));
if not odd(M)
then if J< = (M+1) then Y: = trunc (0,5(M+J))
                   else Y: = trunc (0,5(M+J)-M)
else if J< = M then Y: = trunc (0,5(M+J+1)
               else Y: = trunc (0,5(M+J+1)-M);


comment Warteschleife bis zum nächsten Intervall;
repeat
begin t: = echtzeituhr; PHI:= 2•pi•F•t  end
until PHI> J•pi/M;
J:= J+1;
if PHI> = 2•pi then reset echtzeituhr;
end
end procedure.
```

Mit der darin verwendeten Funktion v = trunc (w) wird jeder rationalen Zahl bzw. jedem Dezimalbruch w größer als Null die größte ganze Zahl v, die kleiner oder gleich w ist, zugeordnet (vgl. Jensen /Wirth "PASCAL User Manual and Report", 2nd edition, 1978, Seite 13).

Der obige Algorithmus, der zur prinzipiellen Verdeutlichung eines erfindungsgemäßen Merkmals, nicht aber als ablauffähiges Rechenprogramm dienen soll, ermöglicht die Ermittlung der Netzphasen X bzw. Y, die mit den entsprechenden Verbraucherphasen y bzw. x über dazwischengeschaltete Thyristoren zu verbinden sind.

Die Verbraucherphasen y bzw. x können analog in Abhängigkeit vom Verbrauchersynchronisierungswinkel phi gem. Gleichung (3) ermittelt werden, indem im obigen Algorithmus y anstelle von X bzw. x anstelle von Y eingesetzt wird. Ferner sind m, j, f bzw. phi anstelle von M, J, F bzw. PHI einzusetzen.

Das erfindungsgemäße Kommutierungsverfahren kann also z.B. mittels zweier, unabhängig voneinander ablaufender Rechnerprogramme oder mittels zweier nahezu identischer Rechenschaltungen realisiert werden, die nach weitgehend gleicher algorithmischer Struktur jeweils die netzsynchronisierte und die verbrauchersynchronisierte Kommutierung berechnen.

Natürlich sind auch Abwandlungen des obigen Algorithmus zur Berechnung der Zahlen X,Y,x,y für die Zündung des Thyristorpaars $T_{X,y}$, $T_{x,Y}$ denkbar, die dennoch im Rahmen des allgemeinen Erfindungsprinzips liegen in Übereinstimmung mit Auspruch 1 oder 6, sofern die Ermittlung des Thyristorpaars in Abhängigkeit vom genannten Netz- bzw. Verbrauchersynchronisierungswinkel erfolgt, und die Freigabe zur Ansteuerung der beiden Thyristoren im Überlappungszeitraum der genannten Netz- bzw. Verbrauchersynchronisierungsintervalle bewirkt wird. So ist im beiliegenden Bild 1 eine gegenüber dein obigen PASCAL-Algorithmus abgewandelte Ablauflogik in Form eines Flußdiagramms dargestellt, nach deren Prinzip die Zahlen X bzw.Y ebenfalls erfindungsgemäß berechnet werden können. Zur Berechnung der Zahlen y bzw. x für die Verbraucherphasen sind, wie oben beim PASCAL-ähnlich notierten Algorithmus, die mit Kleinbuch-

4

staben bezeichneten Größen anstelle der mit Großbuchstaben bezeichneten einzusetzen. Aus dem Flußdiagramm ist insbesondere die Bestimmung des Netz- bzw. Verbraucherperiodenintervalls J bzw. j in Abhängigkeit vom entsprechenden Synchronisierungswinkel erkennbar.

Zur Verringerung des Oberwellengehaltes der Ströme werden die Zeitintervalle j entsprechend dem Verbraucher-Synchronisierungswinkels phi bzw. J entsprechend dem Netz-Synchronisierungswinkels PHI jeweils mit einer Sperrzeit TAU bzw. tau versehen, während der keine Thyristoren gezündet werden. Die Sperrzeit tau für das Verbraucherperiodenintervall j ergibt sich aus

(5) tau = 1/4 $\cdot$ M $\cdot$ F.

Analog gilt für die Sperrzeit TAU im Netzperiodenintervall J:

(6) TAU = 1/4 $\cdot$ m $\cdot$ f.

Die Sperrzeiten sind ferner von einem Sperrwinkel delta (radiant) bei Netzkommutierung bzw. einem Sperrwinkel DELTA (radiant) bei Verbraucherkommutierung ableitbar. Für den Sperrwinkel delta bei Netzkommutierung gilt:

(7) delta = pi $\cdot$ f/2 $\cdot$ M $\cdot$ F

Bei Verbraucherkommutierung wird delta gleich Null gesetzt.

Für den Sperrwinkel DELTA bei Verbraucherkommutierung gilt dann:

(8) DELTA = pi $\cdot$ F/2 $\cdot$ m $\cdot$ f,

wobei bei Netzkommutierung DELTA gleich Null gesetzt wird.

Um beispielsweise in einer als Verbraucher betriebenen elektrischen Mschine die induzierte Spannung (elektromotorische Kraft - EMK) zwecks Feldschwächung reduzieren zu können, ist gemäß einer weiteren vorteilhaften Ausgestaltung das erfindungsgemäße Verfahren einer Sehnung zugänglich:

Bei der Ermittlung der Zahlen X,Y bzw. x, y werden die Zahlen X bzw. Y um die Zahl N, die Zahlen x, y um n vergrößert oder verkleinert. Dabei sind n bzw. N positive ganze Zahlen zwischen null und im wesentlichen der Hälfte der Anzahl der Netzphasen bzw. Verbraucherphasen.

Betreibt man einen m-phasigen Verbraucher wie z.B. eine elektrische Maschine so, als hätte sie weniger als m Phasen, so läßt sich dadurch deren Drehzahl erhöhen. Durch Halbierung, Drittelung usw. der Phasenzahl m der Verbrauchermaschine läßt sich deren Synchrondrehzahl verdoppeln, verdreifachen usw. Dem dient eine weitere Ausgestaltung des erfindungsgemäßen Verfahrens, wonach dem Verfahrensalgorithmus anstelle der tatsächlichen Netz- bzw. Verbraucherphasenzahl M bzw. m demgegenüber vorzugsweise halbierte, gedrittelte usw. Phasenzahlen M' bzw. m' vorgegeben werden, wie im Anspruch 6 beansprucht.

Bezüglich weiterer Ausbildungen und Verbesserungen des erfindungsgemäßen Verfahrens wird auf die Unteransprüche und auf die nachfolgende Erläuterung der Erfindung an Hand der Zeichnung verwiesen. Es zeigen

Bild 1  ein Flußdiagramm für eine Ablauflogik zur Durchführung des erfindungsgemäßen Verfahrens;

Bild 2  einen Direktumrichter mit natürlicher Kommutierung für ein M-phasiges Netz und einen m-phasigen Verbraucher zur Durchführung des erfindungsgemäßen Verfahrens;

Bild 3  einen Direktumrichter mit natürlicher Kommutierung zur Durchführung des erfindungsgemäßen Verfahrens für ein dreiphasiges Netz und einen dreiphasigen Verbraucher;

Bild 4  die graphisch ermittelten Spannungsverläufe $u_{1,2}$, $u_{2,3}$, und $u_{3,1}$ bei f = 0,26 F und M=m=3;

Bild 5  graphisch ermittelte Spannungsverläufe $u_{1,2}$,$u_{2,3}$ und $u_{3,1}$ bei f = 0,71 F und M=m=3;

Bild 6  graphisch ermittelte Spannungsverläufe $u_{1,2}$,$u_{2,3}$ und $u_{3,1}$ bei f = F und M=m=3;

Bild 7  Strom- und Spannungsverläufe bei f = F.

In Bild 2 ist die Schaltung des Direktumrichters für ein M-phasiges Netz und einen m-phasigen Verbraucher dargestellt. Das gleichzeitig stromführende Thyristorpaar $T_{x,y}$ und $T_{X,Y}$ ist mittels schwarz ausgefüllter Schaltsymbole deutlich hervorgehoben. In Bild 3 ist ein Ausführungsbeispiel mit einem dreiphasigen Netz (M = 3) und einem dreiphasigen Verbraucher (m = 3) bei Netzkommutierung gezeigt. Die dazugehörige Schaltung des Direktumrichters umfaßt die 2 $\cdot$ M $\cdot$ m = 2 $\cdot$ 3 $\cdot$ 3 = 18 Thyristoren.

Mit Hilfe des oben angegebenen Verfahrensalgorithmus lassen sich hierfür die Zündbedingungen der einzelnen Thyristoren in Abhängigkeit vom Netz- bzw. Verbraucher-Synchronisierungswinkel PHI bzw. phi ermitteln.

5

Ferner können in den Ausführungsbeispielen noch Sperrzeiten tau für den Fall netzgeführter Kommutierung eingeführt sein, wobei die obere zeitliche Grenze des Verbraucherperiodenintervalls j um tau vermindert ist mit der Folge, daß die Zeitspanne für die Zündung von Thyristoren verringert ist.

Die Steuerung der Verbraucherspannung kann dadurch erfolgen, daß der Netz-Synchronisierungswinkel PHI gegenüber der Grundschwingung der verketteten Netzspannung $u_{I,II}$ verschoben wird, indem der Steuerwinkel A gemäß obiger Gleichung (2) in Verbindung mit obiger Gleichung (1) verändert wird.

In den Bildern 4, 5 und 6 sind die entsprechend dem erfindungsgemäßen Verfahren graphisch ermittelten Spannungsverläufe $u_{1,2}$, $u_{2,3}$ und $u_{3,1}$ jeweils für f = 0,26 F, f = 0,71 F und f = 1 F dargestellt. Die Netzfrequenz kann dabei z.B. F = 50 Hz betragen. Die Ausgangsspannung wurde entsprechend der Ausgangsfrequenz abgesenkt, da diese Relation für den Betrieb elektrischer Drehfeldmaschinen typisch ist.

Die senkrechten, durchgezogenen und die vier waagrechten Zeitachsen kreuzenden Linien in den Bildern 4 - 6 begrenzen beidseitig je ein Zeitintervall J, das bei 2 • M = 2 • 3 = 6 Zeitintervallen pro Netzschwingungsperiode 60° entspricht. Die senkrechten, gestrichelten und die vier Zeitachsen kreuzenden Linien in den Bildern 4 und 5 geben die Zündzeitpunkte der entsprechenden Thyristoren an, wobei zur Verringerung des Oberwellengehalts der Ströme die genannte Sperrzeit tau berücksichtigt wurde.

Die bei f = F erzielten Spannungs- bzw. Stromverläufe verlaufen bei induktiver Last gem. Bild 7. Das vorgeschlagene Kommutierungsverfahren ist vorzugsweise auf einen polygonal verschalteten Verbraucher anzuwenden. Solchenfalls verlaufen die Ströme in den Verbraucherwicklungen der Dreieckschaltung gem. Bild 3 ($i_{1,2}$, $i_{2,3}$ und $i_{3,1}$) ungefähr wie in Bild 7 gezeigt. Ferner finden gem. Ausführungsbeispiel nach Bild 7 die zu zündenden Thyristoren immer eine positive Anoden-Kathodenspannung vor, wenn der Lastphasenwinkel psi kleiner als 60°, d.h. dessen Kosinus größer als 0,5 ist. Der damit erzielte Vorteil besteht insbesondere darin, daß für weite Bereiche der elektrischen Antriebstechnik (z.B. Drehzahlsteuerungen von Pumpen oder Ventilatoren, die von Asynchron-Kurzschlußläufer-Motoren angetrieben werden) der mit dem erfindungsgemäßen Verfahren betriebene Umrichter keine Einrichtung zur Stromrichtungs-Erfassung benötigt, anders als bei allen bisher bekannten Direktumrichtern mit natürlicher Kommutierung, die zur Stromrichtungserfassung beispielsweise HALL-Wandler verwenden.

Ein weiterer Vorteil der vorgeschlagenen Lösung besteht in der steuerungstechnisch einfach zu realisierenden Möglichkeit, nach Erreichen der Netzfrequenz (f = F) und der Netzspannung ($U_{1,2}$ = U $_{I,II}$) den Verbraucher mittels eines Schützes direkt ans Netz zu schalten und dadurch den Direktumrichter zu überbrücken, da gem. Bild 6 bereits eine Synchronisation zwischen Netz- und Verbraucherspannung vorhanden ist.

## Patentansprüche

1. Verfahren zur natürlichen, netz- oder verbrauchergeführten Kommutierung eines Direktumrichters (DU), geschaltet zwischen einem M-phasigen Netz mit der Frequenz F und einem m-phasigen Verbraucher mit der Frequenz f, insbesondere einer elektrischen Maschine, wobei der Direktumrichter (DU) 2 • M • m Thyristoren umfaßt, die jede Netzphase mit jeder Verbraucherphase bidirektional verbinden, dadurch gekennzeichnet,

daß die Netzperioden 1/F bzw. Verbraucherperioden 1/f synchron zur verketteten Spannung zwischen den ersten beiden Phasen des Netzes bzw. Verbrauchers in 2 • M bzw. 2 • m jeweils gleich lange, zeitliche Intervalle J bzw. j unterteilt werden, wobei J bzw. j ganze Zahlen zwischen eins und 2 • M bzw. 2 • m sind, und

daß in der Überlappungsphase zweier Intervalle J und j ein Thyristorpaar $T_{x,y}$ und $T_{X,Y}$, das gleichzeitig Strom von einer Netzphase X zu einer Verbraucherphase y und von einer Verbraucherphase x zu einer Netzphase Y führen kann, zur Zündung freigegeben wird,

wobei X = trunc (0,5(J + 1)), y = trunc (0,5(j + 1)) gilt, und, falls m bzw. M geradzahlig sind,
x = trunc (0,5(m + j)) bzw.
Y = trunc (0,5(M + J)),
wenn j bzw. J kleiner oder gleich m + 1 bzw.
M + 1 sind, sonst
x = trunc (0,5(m + j)-m) und
Y = trunc (0,5(M + J)-M) gilt, wohingegen, falls m bzw. M ungeradzahlig sind,
x = trunc (0,5(mj1 + j)) bzw.
· Y = trunc (0,5(M + 1 + J)), wenn j bzw. J kleiner oder gleich m bzw. M sind, sonst
x = trunc (0,5(m + 1 + j)-m) bzw.
Y = trunc (0,5(M + 1 + J)-M) gilt.

**2.** Verfahren nach Anspruch 1,
dadurch gekennzeichnet,
daß im Falle netzgeführter Kommutierung jedes Verbraucherperiodenintervall j eine Sperrzeit tau = 1/4 • M • F aufweist, während der die Zündung der Thyristoren gesperrt ist.

**3.** Verfahren nach Anspruch 1,
dadurch gekennzeichnet,
daß im Falle verbrauchergeführter Kommutierung jedes Netzperiodenintervall J eine Sperrzeit TAU = 1/4 • m • f aufweist, während der die Zündung der Thyristoren gesperrt ist.

**4.** Verfahren nach Anspruch 2 oder 3,
dadurch gekennzeichnet, daß die Sperrzeiten tau bzw. TAU gleichzeitig mit den Intervallen j bzw. J enden.

**5.** Verfahren nach einem der Ansprüche 1-4,
dadurch gekennzeichnet,
daß bei der Ermittlung der Zahlen X,Y bzw. x,y die Zahlen x bzw. y um n und/oder die Zahlen X bzw. Y um N vergrößert oder verkleinert werden, wobei n und N positive, ganze Zahlen im wesentlichen zwischen null und 0,5m bzw. 0,5M bei geradzahligem m bzw. M und zwischen null und 0,5(m + 1) bzw. 0,5(M + 1) bei ungeradzahligem m bzw. M sind.

**6.** Verfahren gem. Oberbegriff des Anspruchs 1, dadurch gekennzeichnet, daß die Netzperioden 1/F bzw. Verbaucherperioden 1/f synchron zur verketteten Spannung zwischen den ersten beiden Phasen des Netzes bzw. Verbrauchers in 2 • M' bzw. 2 • m' jeweils in gleich lange, zeitliche Intervalle J bzw. j unterteilt werden, wobei M' = trunc (M/s) und m' = trunc (m/s) mit s als einer natürlichen Zahl größer als eins sind, und J bzw. j ganze Zahlen zwischen eins und 2 • M bzw. 2 • m sind, und daß in der Überlappungsphase zweier Intervalle J und j ein Thyristorpaar $T_{x,y}$ und $T_{x,Y}$, das gleichzeitig Strom von einer Netzphase X zu einer Verbraucherphase y und von einer Verbraucherphase x zu einer Netzphase Y führen kann, zur Zündung freigegen wird,
wobei X = trunc (0,5(J + 1)), y = trunc (0,5(j + 1)) gilt, und, falls m' bzw. M' geradzahlig sind,
x = trunc (0,5(m' + j)) bzw.
Y = trunc (0,5(M' + J)),
wenn j bzw. J kleiner oder gleich m' + 1 bzw.
M' + 1 sind, sonst
x = trunc (0,5(m' + j)-m) und
Y = trunc (0,5(M' + J)-M) gilt, wohingegen, falls m' bzw. M' ungeradzahlig sind,
x = trunc (0,5(m' + 1 + j)) bzw.
Y = trunc (0,5(M' + 1 + J)), wenn j bzw. J kleiner oder gleich m' bzw. M' sind, sonst x = trunc (0,5-(m' + 1 + j)-m) bzw.
Y = trunc (0,5(M' + 1 + J)-M') gilt.

## Claims

**1.** Method for natural commutation, piloted by the network or load, of a direct converter which is wired between an M-phase network with the frequency F and an m-phase load with the frequency f, especially an electrical machine, whereby the direct converter comprises 2xMxm thyristors connecting bidirectionally each network phase with each load phase,
characterised in that,
the network periods 1/F and the load periods 1/f respectively are divided synchronously with the voltage between the first and the second phases of the network and the load respectively into 2xM rsp. 2xm equally long time intervals J rsp. j, whereby J rsp. j are integer figures between one and 2xM rsp. between one and 2xm, and
in that in the overlapping period of two intervals J and j a pair of thyristors $T_{x,y}$ and $T_{x,Y}$, which simultaneously can conduct current from a network phase X to a load phase y and from a load phase x to a network phase Y, is being set free for firing,
whereby x = trunc (0.5x(J + 1)), y = trunc (0.5x(j + 1)) and if m rsp. M are even numbers, x = trunc (0.5x(m + j)) rsp.
Y = trunc(0.5x(M + J)) if j rsp. J are smaller or equal m + 1 rsp. M + 1, otherwise x = trunc(0.5x-

EP 0 189 211 B1

(m + j)-m) and

Y = trunc(0.5x(M + J)-M), whereas, if m rsp. M are odd numbers x = trunc(0.5x(m + 1 + j)) rsp. Y = trunc(0.5x(M + 1 + J)) if j rsp. J are smaller or equal m rsp. M, otherwise x = trunc(0.5x(m + 1 + j)-m) rsp. Y = trunc(0.5x(M + 1 + J)-M).

2. Method according to claim 1,
   characterised in that,
   in case of a commutation piloted by the network each load period intervall j is blocked for a blocking time tau = 1/4xMxF, during which the firing of the thyristors is blocked.

3. Method according to claim 1,
   characterised in that,
   in case of a commutation piloted by the load each line period intervall J is blocked for blocking a time TAU = 1/4xmxf, during which the firing of the thyristors is blocked.

4. Method according to claims 2 or 3,
   characterised in that,
   the blocking times tau rsp. TAU terminate simultaneously to the intervals j rsp. J.

5. Method according to one of the claims 1 to 4,
   characterised in that,
   at the determination of the figures X,Y rsp. x,y, the values x rsp. y are increased or decreased by n, and/or the values X rsp. Y are increased or decreased by N, whereby n and N are positives integer numbers essentially ranging between zero and 0.5xm rsp. 0.5xM if m rsp. M are even figures, and between zero and 0.5x(m + 1) rsp. 0.5x(M + 1) if m rsp. M are odd numbers.

6. Method according to the preambel of claim 1,
   characterised in that,
   the network periods 1/F and the load periods 1/f respectively are divided synchronously with the voltage between the first and the second phases of the network and the load respectively into 2xM' rsp. 2xm' equally long time intervals J rsp. j, whereby M' = trunc(M/s) and m' = trunc(m/s) with s as a natural figure greater than one, and J rsp. j are integer figures between one and 2xM rsp. 2xm, and in that in the overlapping period of two intervals J and j a pair of thyristors $T_{x,y}$ and $T_{x,Y}$, which simultanously can conduct current from a network phase Y to a load phase y and from a load phase x to a network phase Y, is being set free for firing,
   whereby x = trunc(0.5x(J + 1)),
   y = trunc(0.5x(j + 1)) and, if m' rsp. M' are even numbers, x = trunc(0.5x(m' + j)) rsp. Y = trunc(0.5x-(M' + J) if j rsp. J are smaller or equal m' + 1 rsp. M' + 1, otherwise
   x = trunc(0.5x(m' + j)-m) and
   Y = trunc(0.5x(M' + J)-M), whereas, if m' rsp. M' are odd numbers,
   x = trunc(0.5x(m' + 1 + j)) rsp.
   Y = trunc(0.5x(M' + 1 + J)) if j rsp. J are smaller or equal m' rsp. M', otherwise
   x = trunc(0.5x(m' + 1 + j)-m) rsp.
   Y = trunc(0.5x(M' + 1 + J)-M).

**Revendications**

1. Procédé de commutation naturelle, pilotée par le réseau ou par la charge, d'un convertisseur de fréquence statique direct (DU), connecté entre un réseau à M phases avec une fréquence F et une charge à m phases avec une fréquence f, spécialement d'une machine électrique, le convertisseur direct (DU) comprenant un nombre 2.M.m de thyristeurs qui connectent de façon bidirectionelle chaque phase de réseau avec chaque phase de charge,
   caractérisé en ce que
   les périodes du réseau 1/F resp. les périodes de la charge 1/f sont synchrones à la tension enchaînée entre les deux premières phases du réseau resp. de la charge et sont partagées en 2.M resp. 2.m intervalles de temps de même durée J resp. j, J resp. j étant des nombres entiers compris entre un et 2.M resp. 2.m, et en ce que pendant le temps de superposition des deux intervalles J et j, un couple de thyristeurs $T_{x,y}$ und $T_{x,Y}$, qui peut conduire du courant en même temps d'une phase de réseau X à une phase de charge y et d'une phase de charge x à une phase de réseau Y, devient prêt à être amorcé,

les conditions X = trunc $(0,5(J+1))$,

y = trunc $(0,5(j+1))$ étant valables, et, au cas où m resp. M sont des nombres pairs,

x = trunc $(0,5(m+j))$ resp.

Y = trunc $(0,5(M+J))$,

et lorsque j resp. J $\leq$ m + 1 resp. M + 1, sinon les conditions

x = trunc $(0,5(m+j)-m)$ et

Y = trunc $(0,5(M+J)-M)$ sont valables; par contre, au cas où m resp. M sont des nombres impairs,

x = trunc $(0,5(m+1+j))$ resp.

Y = trunc $(0,5(M+1+J))$,

et lorsque j resp. J $\leq$ m resp. M, sinon les conditions

x = trunc $(0,5(m+1+j)-m)$ resp.

Y = trunc $(0,5(M+1+J)-M)$ sont valables.

2. Procédé selon la revendication 1,
caractérisé en ce que
dans le cas d'une commutation pilotée par le réseau, chaque intervalle de période de la charge j comprend un temps de blocage tau = 1/4.M.F, pendant lequel l'amorçage des thyristeurs est bloqué.

3. Procédé selon la revendication 1,
caractérisé en ce que
dans le cas d'une commutation pilotée par la charge, chaque intervalle de période du réseau J comprend un temps de blocage TAU = 1/4.m.f, pendant lequel l'amorçage des thyristeurs est bloqué.

4. Procédé selon les revendications 2 ou 3,
caractérisé en ce que
les temps de blocage tau resp. TAU se terminent en même temps que les intervalles j resp. J.

5. Procédé selon une des revendications 1 à 4,
caractérisé en ce que
pour déterminer les index X, Y resp. x, y, les index x resp. y sont augmentés ou diminués de la valeur n et/ou les index X resp. Y augmentés ou diminués de la valeur M, n et M étant des nombres entiers positifs, essentiellement compris entre zéro et 0,5m resp. 0,5M, si m resp. M sont pairs, et entre zéro et 0,5(m + 1) resp. 0,5(M + 1), si m resp. M sont impairs.

6. Procédé selon le préambule de la revendication 1,
caractérisé en ce que
les périodes du réseau 1/F resp. de la charge 1/f sont synchrones à la tension enchaînée entre les deux premières phases du réseau resp. de la charge et sont partagées en 2.M' resp. 2.m' intervalles de temps de même durée J resp. j , les conditions

M' = trunc (M/s) m' = trunc (m/s) étant valables lorsque s est un nombre naturel supérieur à 1, et J resp. j des nombres entiers compris entre 1 et 2.M resp. 2.m, et en ce que dans la phase de superposition de deux intervalles J et j, un couple de thyristeurs $T_{x,y}$ et $T_{x,Y}$, qui peut conduire simultanément du courant d'une phase de réseau X à une phase de charge y et d'une phase de charge x à une phase de réseau Y, devient prêt à être amorcé,

les conditions X = trunc $(0,5J+1))$, y = trunc $(0,5(j+1))$ étant valables, et, au cas où m' resp. M' sont des nombres pairs,

x = trunc $(0,5(m'+j))$ resp.

Y = trunc $(0,5(M'+J))$,

et lorsque j resp. J $\leq$ m' + 1 resp. M' + 1, sinon les conditions

x = trunc $(0,5(m'+j)-m)$ et

Y = trunc $(0,5(M'+J)-M)$ sont valables; par contre, au cas où m' resp. M' sont des nombres impairs,

x = trunc $(0,5(m'+1+j))$ resp.

Y = trunc $(0,5(M'+1+J))$,

et lorsque j resp. J $\leq$ m' resp. M', sinon les conditions

x = trunc $(0,5(m'+1+j)-m)$ resp.

Y = trunc $(0,5(M'+1+J)-M)$ sont valables.

ANFANG

M:= Anzahl der Netzphasen
F:= Netzfrequenz

t:= Zeituhr
PHI:= 2 • pi • F • t

Zeituhr:= 0

PHI > 2pi ?
ja
nein

J:= trunc (PHI•M/pi)

M geradzahlig ?
ja
nein

J <= M ?
ja
nein

J <= (M+1) ?
ja
nein

Y:= trunc (0,5(M+1+J))

Y:=trunc (0,5(M+1+J)-M)

Y:= trunc (0,5(M+J))

Y:= trunc (0,5(M+J)-M)

X:= trunc (0,5(J+1))

10

Verbraucher

$u_{II,III}$   $u_{III,I}$   $u_{I,II}$

J =   III   IV   V   VI   I   II   III   IV   V   VI   I   II   III   IV   V   VI   I

$u_{1,2}$

$u_{2,3}$

$u_{3,1}$